# EUROPÄISCHE PATENTSCHRIFT

(11) **EP 2 089 871 B1**
(45) Veröffentlichungstag und Bekanntmachung des Hinweises auf die Patenterteilung: **30.06.2010**
(21) Anmeldenummer: 07856124.8
(22) Anmeldetag: 14.12.2007
(51) Int. Cl.: G08G 1/127, G06Q 10/00

(54) **VORRICHTUNG ZUM ERKENNEN DES STAPELZUSTANDES EINES CONTAINERS**
APPARATUS FOR THE DETECTION OF THE STACKED STATE OF A CONTAINER
DISPOSITIF POUR RECONNAÎTRE L'ÉTAT D'EMPILEMENT D'UN CONTENEUR

(30) Priorität: 14.12.2006 DE 102006059000
(43) Veröffentlichungstag der Anmeldung: 19.08.2009
(73) Patentinhaber: Koch, Rainer, 04683 Fuchshain (DE)
(72) Erfinder: Koch, Rainer, 04683 Fuchshain (DE)
(74) Vertreter: von Puttkamer, Nikolaus
(86) Internationale Anmeldenummer: PCT/DE2007/002276
(87) Internationale Veröffentlichungsnummer: WO 2008/071182

(56) Entgegenhaltungen:
- WO-A-96/08760
- WO-A-2004/027727
- DE-A1- 19 704 210
- US-A1- 2005 073 406
- US-A1- 2007 113 882

## Beschreibung

Die vorliegende Erfindung betrifft eine Vorrichtung zum Erkennen des Stapelzustandes eines Containers.

Aus der DE 10 2004 059 759 A1 ist eine Überwachungseinrichtung zur Überwachung von Containern auf ihrem Transportweg bekannt, bei der in einem Gehäuse eine Recheneinheit zur Verarbeitung von über eine Antenne empfangenen Positionssignalen und zur Erzeugung von an eine Leitzentrale zu sendenden Daten vorgesehen ist. Das Gehäuse ist lösbar an der Wand eines Containers befestigbar. Die Recheneinheit speichert die während des Transportes des Containers empfangenen Positionssignale und sendet diese zu vorbestimmten Zeiten an die Leitzentrale zur Registrierung der Transportroute des Containers.

Aus der WO 2004/027727 geht ein Verfahren zur Überwachung eines Containers und seines Inhaltes sowie zur Standortverfolgung hervor. Die Erfassung des Stapelzustandes des Containers spielt hierbei jedoch keine Rolle.

Die Aufgabe der vorliegenden Erfindung besteht darin, eine Vorrichtung zu schaffen, mit der es einer Überwachungszentrale ermöglicht wird, einen Container im intermodalen Verkehr so zu überwachen, dass bei seinem Transport auf Schiffen und bei seiner Lagerung, z.B. in Hafenterminals, die Zustände "Container gestapelt" und "Container freigestellt" erfassbar sind.

Diese Aufgabe wird durch eine Vorrichtung zum Erkennen des Stapelzustandes eines Containers gelöst, die eine Solareinheit, ein einen Sender und einen Empfänger aufweisendes Ortungsgerät und eine Ladeeinheit aufweist, die den Sender und den Empfänger speist, wobei der Sender mit einer entfernten Überwachungszentrale kommuniziert. Die umfasst ferner eine Messeinrichtung, die als Lichtindikator für das Tages- oder Kunstlicht außerhalb des Containers dient und durch die ein Aktivierungssignal erzeugbar ist, wenn die Vorrichtung dem Tages- bzw. Kunstlicht ausgesetzt und der Container daher freigestapelt ist. Das Aktivierungssignal ist an eine Recheneinheit der Vorrichtung lieferbar, wobei durch die Recheneinheit ein Freistell-Signal an das Ortungsgerät der Vorrichtung sendbar ist. Durch die Messeinrichtung ist ein Deaktivierungssignal erzeugbar und an die Recheneinheit lieferbar, wenn die Vorrichtung abgedunkelt ist. Durch die Recheneinheit ist ein den Einstapelzustand des Containers anzeigendes Einstapel-Signal an den Sender sendbar, wenn die Messeinrichtung ermittelt, dass die Vorrichtung länger als die normale Abdunkelung während der Nacht abgedunkelt ist. Durch den Sender sind die dem Einstapelzustand oder dem Freistellzustand des Containers entsprechenden Signale an die Überwachungszentrale sendbar.

Der wesentliche Vorteil der vorliegenden Erfindung besteht darin, dass durch das Erkennen der Zustände "Container gestapelt" und "Container freigestellt" in einer vom jeweiligen Standort des Containers beliebig weit entfernten Überwachungszentrale zeitnah und online erkennbar ist, wann und wo der Container, z.B. auf einem Schiff oder in einem Hafenareal, in einem Containerstapel eingestapelt ist. Vorteilhafterweise geht somit die Überwachung der Zustände "Container gestapelt" und "Container freigestellt" auch in die Transportlogistik des Containers ein, sodass jederzeit, zeitnah und auch rückblickend die Transportdaten des Containers "Route, Einstapeln auf einem Schiff oder im Hafen, Verweildauer im Hafen, etc." kontrolliert werden können.

Ein weiterer ganz wesentlicher Vorteil der vorliegenden Vorrichtung besteht darin, dass sie äußerst sparsam im Hinblick auf den Energieverbrauch arbeitet.

Vorteilhafte Ausgestaltungen der Erfindung werden im Zusammenhang mit den Figuren näher erläutert. Es zeigen:
Figur 1 ein Blockschaltbild der erfindungsgemäßen Vorrichtung zum Erkennen des Stapelzustandes eines Containers;
Figur 2 ein Zeitdiagramm zur Erläuterung der Erfindung; und
Figur 3 eine weitere Ausgestaltung der Erfindung.

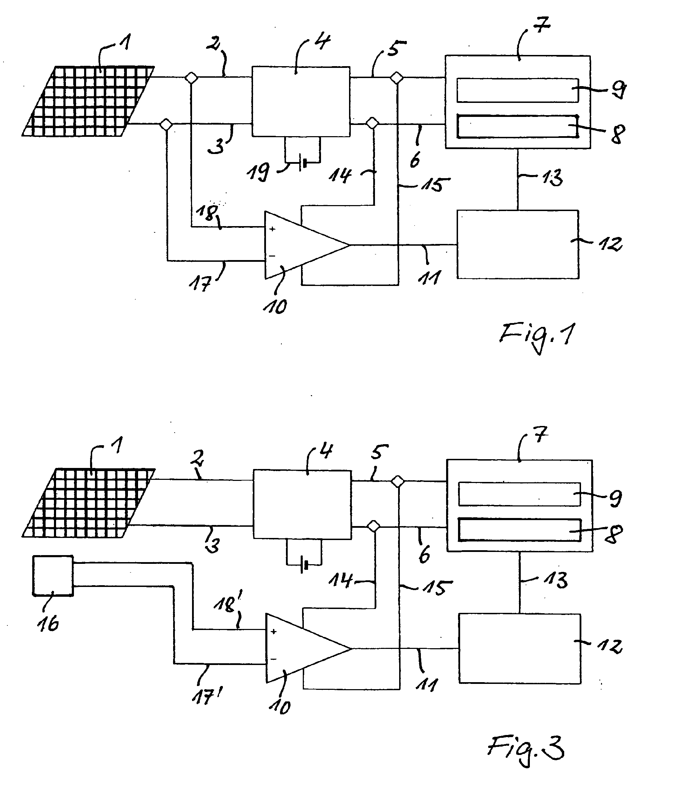

In der Figur 1 ist eine Solareinheit der vorliegenden Vorrichtung mit 1 bezeichnet. Diese Solareinheit 1 ist über Leitungen 2, 3 mit einer Ladeeinheit 4 verbunden, die über Leitungen 5, 6 ein Ortungsgerät 7 speist. Die Ladeeinheit 4 lädt ferner einen Akkumulator 19. Das Ortungsgerät 7 umfasst einen Sender 8 und einen Empfänger 9, beispielsweise einen GPS-Empfänger. Die bisher erwähnten Komponenten bzw. Geräte sind Teil des voranstehend erwähnten Überwachungssystems der DE 10 2004 059 751 A1 und daher bekannt. Die in einem Gehäuse enthaltene Vorrichtung 1 wird vorzugsweise in einer Sicke eines Containers angeordnet, die sich in der oberen Containerwand befindet, wobei das Gehäuse mit der Hilfe von Magnetelementen an der Bodenfläche der Sicke befestigt wird. Dies hat zur Folge, dass das Tageslicht auf die Solareinheit 1 einwirkt, wenn der Container an einem beliebigen Ort freisteht bzw. freigestellt ist.

Erfindungsgemäß umfasst die vorliegende Vorrichtung zum Erkennen des Stapelzustandes eines Containers eine Messeinrichtung 10, die erfasst, ob die Solareinheit 1 Strom an die Ladeeinheit 4 liefert oder nicht (Lichterkennung). Wenn die Messeinrichtung 10 ermittelt, dass ein solcher Strom von der Solareinheit 1 an die Ladeeinheit 4 geliefert wird (Aktivierungszustand), sendet sie über die Leitung 11 ein Aktivierungssignal an eine Recheneinheit 12, das anzeigt, dass die Solareinheit 1 dem Sonnen- bzw. Tageslicht ausgesetzt ist, d.h. der Container freigestellt ist. Die Recheneinheit 12 liefert über die Leitung 13 ein entsprechendes Freistell-Signal an das Ortungsgerät 7. Die Stromversorgung der Messeinrichtung 10 erfolgt über die Leitungen 14 und 15, die mit dem Ausgang der Ladeeinheit 4 verbunden sind. Bei der Recheneinheit 12 handelt es sich vorzugsweise um einen nur wenig Energie verbrauchenden LowPower-Mikrocontroller.

Da die Solareinheit 1 normalerweise während der Dunkelheit der Nacht keinen Strom an die Ladeeinheit 4 liefert (Deaktivierungszustand), und somit die Messeinrichtung 10 an die Recheneinheit 12 kein Freistell-Signal sendet, muss die Recheneinheit 12 zwischen dem normalen Nachtzustand und einem Zustand unterscheiden können, der länger als die normale Abdunkelung der Solareinheit 1 während der Nacht dauert. Erst wenn die Recheneinheit 12 erkennt, dass die Abdunkelung länger als die normale Nachtzeit erfolgt, wird ein entsprechendes Einstapel-Signal über die Leitung 13 an den Eingang des Ortungsgerätes 7 gesendet, das den Zustand "Container eingestapelt" anzeigt, da die Solareinheit 1 dann auch während der Tageszeit durch über ihr im Stapel angeordnete Container abgedunkelt ist.

Gemäß der Darstellung der Figur 1 wird das die Aktivierung der Solareinheit 1 anzeigende Aktivierungssignal in der Form des Ausgangssignals der Solareinheit 1 über die Leitungen 17 und 18 an die Messeinrichtung 10 angelegt. Die Solareinheit 1 dient dann auch als Lichtindikator.

Gemäß der Darstellung der Figur 3 ist es aber auch denkbar, das den aktivierten Zustand der Solareinheit 1 anzeigende Aktivierungssignal von einem zusätzlichen Lichtsensor 16 zu erhalten, der im Bereich der Solareinheit 1 angeordnet ist und dessen Ausgangssignal an die Messeinrichtung 10 über die Leitungen 17' und 18' geliefert wird. In diesem Fall dient der Lichtsensor 16 als Lichtindikator.

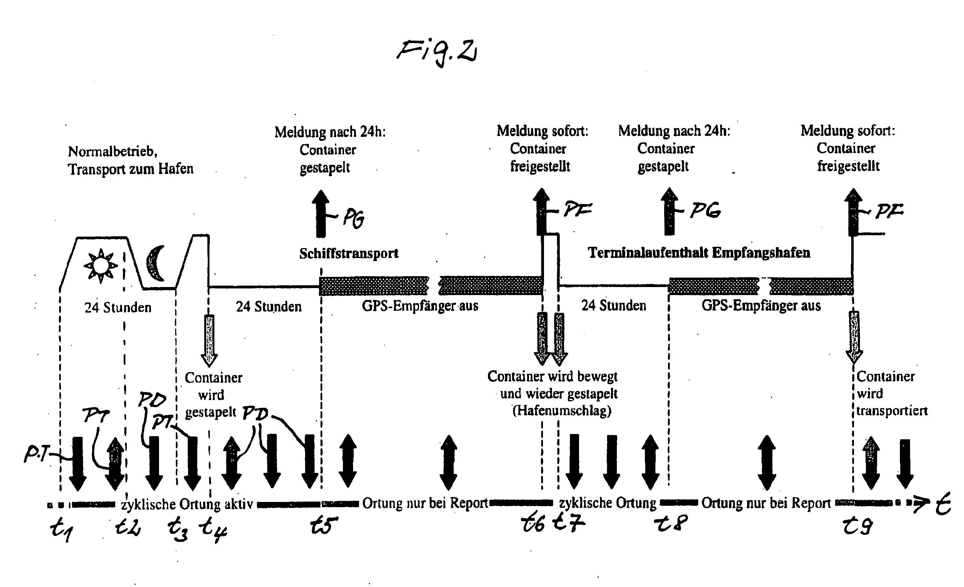

Im folgenden wird im Zusammenhang mit der Figur 2 das Prinzip der vorliegenden Erfindung näher erläutert, wobei auf der X-Achse des dargestellten Diagramms die Transportzeit t und auf der Y-Achse die Aktivierungs- bzw. Deaktivierungszustände der Solareinheit 1 bzw. des Lichtsensors 16 dargestellt sind. Zum Zeitpunkt t1 beginnt ein normaler Tagesablauf, wobei während der Tagesphase (Zeitpunkt t1 bis t2) entsprechend den Pfeilen PT der Aktivierungszustand der Solareinheit 1 bzw. des Lichtsensors 12 von der Messeinrichtung 10 ermittelt und dem Ortungsgerät 7 bzw. dem Sender 8 von der Recheneinheit 10in der Form des Freistell-Signals mitgeteilt wird. Während der darauf folgenden Nachtphase t2 bis t3 wird der Deaktivierungszustand der Solareinheit 1 bzw. des Lichtsensors 16 von der Messeinrichtung 10 ermittelt und entsprechend den Pfeilen PD wird ein entsprechendes Deaktivierungssignal an die Recheneinheit 12 geliefert. Dieser Ablauf t1 bis t3 entspricht dem normalen Tagesablauf, wenn der Container nicht eingestapelt ist.

Zum Zeitpunkt t3 beginnt beispielsweise der nächste Tagesablauf, während dem zum Zeitpunkt t4 der Container eingestapelt wird. Der im Zeitintervall t3 bis t4 von der Messeinrichtung 10 angezeigte Aktivierungszustand (Pfeil PT) wird beim Einstapeln des Containers zum Zeitpunkt t4 unterbrochen. Dies bedeutet, dass gemäß dem Pfeilen PD der Deaktivierungszustand der Messeinrichtung 10 angezeigt und das Deaktivierungssignal an die Recheneinheit 12 angelegt wird. Wenn dieser Deaktivierungszustand länger als eine vorgegebene Zeitdauer, vorzugsweise länger als 24 Stunden andauert, wird zum Zeitpunkt t5 der Zustand "Container eingestapelt" von der Recheneinheit 12 ermittelt, weil die Solareinheit 1 bzw. der Lichtsensor 16 länger als der normalen Nachtphase entsprechend den Deaktivierungszustand angezeigt hat. Ein entsprechendes Einstapel-Signal PG wird von der Recheneinheit 12 erzeugt und an das Ortungsgerät 7 geliefert. Um Energie sparen zu können, wird daher durch das den Einstapelzustand zum Zeitpunkt t5 anzeigende Einstapel-Signal vorzugsweise der GPS-Empfänger 9 des Ortungsgerätes 7 ausgeschaltet. Im Einstapelzustand ist mit großer Wahrscheinlichkeit ohnehin kein GPS-Signal zu erwarten. Der Akkumulator 19 wird daher nicht unnötig entladen.

Wenn nachfolgend zum Zeitpunkt t6 der Container bei einem Hafenumschlag aus einem Stapel herausbewegt und zum Zeitpunkt t7 nachfolgend wieder gestapelt wird, wird zum Zeitpunkt t6 der Aktivierungszustand von der Messeinrichtung 10 erkannt und wird von der Recheneinheit 12 an das Ortungsgerät 7 das Freistell-Signal gesendet, dessen Sender 9 die Meldung absetzt, "Container freigestellt", wie dies durch den Pfeil PF dargestellt ist. Wenn nach dem erneuten Einstapeln zum Zeitpunkt t7 wieder der Deaktivierungszustand erkannt wird, wird nach Ablauf der Zeitdauer t7 bis t8, die wieder vorzugsweise 24 Stunden beträgt, das Einstell-Signal (Pfeil PG) von der Recheneinheit 12 erzeugt und an das Ortungsgerät 7 geliefert.

Nach erneutem Einstapeln zum Zeitpunkt t8 wird wieder der GPS-Empfänger 9 zum Zwecke der Energieeinsparung ausgeschaltet.

Schließlich wird z.B. zum Zeitpunkt t9 nach dem erneuten Ausstapeln des Containers zum Weitertransport der Aktivierungszustand von der Messeinrichtung 10 erkannt und die Recheneinheit 12 setzt erneut das Freistell-Signal PF ab. Es beginnt dann der normale Betrieb, der dem Zeitraum t1 bis t2 entspricht.

Die Schaltschwelle für die Lichterkennung wird in der Recheneinheit 12 softwaremäßig vorzugsweise derart definiert, dass bereits das Kunstlicht üblicher Kran- und Transportvorrichtungen bei Nacht ausreicht, um den Aktivierungszustand bzw. den Zustand "Container freigestellt" zu erkennen. Dadurch wird sichergestellt, dass auch bei nächtlichen Entladearbeiten sofort die entsprechende Meldung zur Überwachungszentrale gesendet werden kann. Andererseits ist durch die Konstruktion der üblichen Container und durch deren normalerweise geschwärzte Unterfläche sichergestellt, dass das auf die Solareinheit der vorliegenden Vorrichtung eines eingestapelten Containers einfallende Tageslicht soweit unerdrückt wird, dass die Messeinrichtung 10 kein Tageslicht bzw. der Deaktivierungszustand erkennt.

### Bezugszeichen

- 1: Solareinheit
- 2: Leitung
- 3: Leitung
- 4: Ladeeinheit
- 5: Leitung
- 6: Leitung
- 7: Ortungsgerät
- 8: Sender
- 9: Empfänger
- 10: Messeinrichtung
- 11: Leitung
- 12: Recheneinheit
- 13: Leitung
- 14: Leitung
- 15: Leitung
- 16: Lichtsensor
- 17: Leitung
- 17': Leitung
- 18: Leitung
- 18': Leitung

## Patentansprüche

1. Vorrichtung zum Erkennen des Stapelzustandes eines Containers mit einer Solareinheit (1), einem einen Sender (8) und einen Empfänger (9)aufweisenden Ortungsgerät (7) und einer Ladeeinheit (4), die den Sender (8) und den Empfänger (9) speist, wobei der Sender (8) geeignet ist, mit einer entfernten Überwachungszentrale zu kommunizieren, **dadurch gekennzeichnet, dass** die Vorrichtung eine Messeinrichtung (10) umfasst, die als Lichtindikator für das Tages- oder Kunstlicht außerhalb des Containers dient und durch die ein Aktivierungssignal erzeugbar ist, wenn die Vorrichtung dem Tages- bzw. Kunstlicht ausgesetzt und der Container daher freigestapelt ist, dass das Aktivierungssignal an eine Recheneinheit (12) der Vorrichtung lieferbar ist, wobei durch die Recheneinheit (12) ein Freistell-Signal an das Ortungsgerät (7) der Vorrichtung sendbar ist und dass durch die Messeinrichtung (10) ein Deaktivierungssignal erzeugbar und an die Recheneinheit (10) lieferbar ist, wenn die Vorrichtung abgedunkelt ist, dass durch die Recheneinheit (12) ein den Einstapelzustand des Containers anzeigendes Einstapel-Signal an den Sender (8) sendbar ist, wenn die Messeinrichtung (10) ermittelt, dass die Vorrichtung länger als die normale Abdunkelung während der Nacht abgedunkelt ist, und dass durch den Sender (8) die dem Einstapelzustand oder dem Freistellzustand des Containers entsprechenden Signale an die Überwachungszentrale sendbar sind.

2. Vorrichtung nach Anspruch 1, **dadurch gekennzeichnet, dass** die Messeinrichtung (10) von der Ladeeinheit (4) mit Strom versorgbar ist und dass durch die Messeinrichtung (10) der Aktivierungszustand der Solareinheit (1) aus dem Ausgangssignal der aktivierten Solareinheit (1) ableitbar ist.

3. Vorrichtung nach Anspruch 1, **dadurch gekennzeichnet, dass** die Messeinrichtung (10) von der Ladeeinheit (4) mit Strom versorgbar ist und dass durch die Messeinrichtung (10) der Aktivierungszustand der Solareinheit (1) aus dem Ausgangssignal eines Lichtsensors (16) ableitbar ist.

4. Vorrichtung nach Anspruch 3, **dadurch gekennzeichnet, dass** der Lichtsensor (16) im Bereich der Solareinheit (1) angeordnet ist.

5. Vorrichtung nach einem der Ansprüche 1 bis 4, **dadurch gekennzeichnet, dass** der Empfänger (9) und der Sender (8) Teil des Ortungsgerätes (7) sind.

6. Vorrichtung nach einem der Ansprüche 1 bis 5, **dadurch gekennzeichnet, dass** durch die Recheneinheit (12) das Einstapel-Signal erzeugbar ist, wenn die Messeinrichtung (10) das Deaktivierungssignal länger als 24 Stunden erzeugt.

7. Vorrichtung nach einem der Ansprüche 1 bis 6, **dadurch gekennzeichnet, dass** die Schaltschwelle für die Erkennung des Aktivierungszustandes derart definiert ist, dass durch die Messeinrichtung (10) das Aktivierungssignal auch dann erzeugbar ist, wenn die Solareinheit (1) bzw. der Lichtsensor (16) das bei Nachtarbeiten übliche Kunstlicht erfasst.

8. Vorrichtung nach einem der Ansprüche 1 bis 7, **dadurch gekennzeichnet, dass** die Recheneinheit (12) ein Low-Power-Mikrocontroller ist.

9. Vorrichtung nach einem der Ansprüche 1 bis 8, **dadurch gekennzeichnet, dass** zur Energieersparnis bei Erzeugen des Einstapel-Signales der Empfänger (9) ausschaltbar ist.

10. Vorrichtung nach einem der Ansprüche 1 bis 9, **dadurch gekennzeichnet, dass** der Empfänger ein GPS-Empfänger ist.

11. Vorrichtung nach einem der Ansprüche 1 bis 10, **dadurch gekennzeichnet, dass** die Ladeeinheit (4) einen Akkumulator (19) zum Speichern von Energie aufweist.

12. Verfahren zum Erkennen des Stapelzustandes eines Containers, wobei mit einer Messeinrichtung (10) der Aktivierungszustand und der Deaktivierungszustand einer Solareinheit (1) erfasst werden, ein den Freistellzustand des Containers anzeigendes Freistell-Signal erzeugt wird, wenn die Messeinrichtung (10) den Aktivierungszustand der Solareinheit (1) beim Einfall von außerhalb des Containers vorliegenden Tages- oder Kunstlichtlicht erfasst, und ein den Einstapelzustand des Containers anzeigendes Einstapel-Signal erzeugt wird, wenn der Deaktivierungszustand der Solareinheit (1) bei einer Abdunkelung der Vorrichtung länger erfasst wird, als dies dem Deaktivierungszustand einer normalen Nachtphase entspricht.

13. Verfahren nach Anspruch 12, **dadurch gekennzeichnet, dass** die Vorrichtung in einer Sicke der oberen Wand des Containers befestigt wird.

## Claims

1. An assembly for detecting the stacking condition of a shipping container, comprising a solar module (1), locating means including a transmitter (8) and a receiver (9), and a charging unit (4) powering the transmitter (8) and the receiver (9), said transmitter (8) being suited to communicate with a remotely installed supervisory centre, **characterized in that** said assembly comprises measuring means (10) serving as an indicator for the presence of daylight or artificial light outside the container and adapted to generate an activation signal in case the assembly is exposed to daylight or artificial light and the container is free-standing therefore, **in that** the activation signal can be supplied to a computing unit (12) comprised in the assembly, said computing unit (12) adapted to provide a "container free-standing" signal to locating means (7) in the assembly and measuring means (10) adapted to generate and provide to computing unit (12) a deactivation signal in case the assembly is unlit, **in that** computing unit (12) is adapted to supply to transmitter (8) a "container stacked" signal in case measuring means (10) detects that the assembly has been unlit for a period longer than the normal nighttime absence of light, and **in that** transmitter (8) is adapted to transmit to the supervisory centre the signals corresponding to the "container stacked" or "container free-standing" condition.

2. Assembly as in claim 1, **characterized by** measuring unit (10) being adapted to be powered by charging unit (4) and to derive from the output signal of the activated solar module (1) the activation condition of said solar module (1).

3. Assembly as in claim 1, **characterized by** measuring means (10) being adapted to be powered by charging unit (4) and to derive the activation condition of solar module (1) from the output signal of a light sensor (16).

4. Assembly as in claim 3, **characterized by** light sensor (16) being disposed within the area of solar unit (1).

5. Assembly as in any one of claims 1 to 4, **characterized by** receiver (9) and transmitter (8) being part of locating means (7).

6. Assembly as in any one of claims 1 to 5, **characterized by** computing unit (12) being adapted to generate the "container available to be stacked" signal in case measuring means (10) has been generating the deactivation signal for longer than 24 hrs.

7. Assembly as in any one of claims 1 to 6, **characterized in that** the switching threshold for detecting the state of activation is defined in such a manner that measuring means (10) is adapted to generate the activation signal also if solar module (1) or light sensor (16) detects the artificial light conventionally used in nighttime work.

8. Assembly as in any one of claims 1 to 7, **characterized by** computing unit (12) comprising a low-power microcontroller.

9. Assembly as in any one of claims 1 to 8, **characterized** that receiver (9) is adapted to be deactivated for saving energy when the "container available for stacking" signal is being generated.

10. Assembly as in any one of claims 1 to 9, **characterized in that** the receiver comprises a GPS receiver.

11. Assembly as in any one of claims 1 to 10, **characterized by** charging unit (4) comprising a re-chargeable battery for energy storage.

12. A method of detecting the stacking condition of a shipping container, wherein the activation and deactivation conditions of a solar module (1) are detected by measuring means (10), a "container free-standing" signal indicative of the free-standing condition of the container is generated if measuring means (10) detects the condition of solar module (1) as being activated by incident external daylight or artificial light, and a signal indicative of the "container stacked" condition is generated if the absence of light incident on the assembly causes solar module (1) to assume a deactivated condition for a period of time longer than the normal nighttime phase.

13. Method as in claim 12, **characterized by** mounting the assembly in a recessed portion of the topmost container panel.

## Revendications

1. Dispositif de reconnaissance de l'état d'empilement d'un conteneur, comprenant une unité solaire (1), un appareil de repérage (7) présentant un émetteur (8) et un récepteur (9), et une unité de charge (4) qui alimente l'émetteur (8) et le récepteur (9), l'émetteur (8) étant approprié pour communiquer avec une centrale de surveillance éloignée, **caractérisé en ce que** le dispositif comprend un dispositif de mesure (10) qui sert d'indicateur lumineux pour la lumière du jour ou la lumière artificielle à l'extérieur du conteneur et qui peut être engendré par un signal d'activation lorsque le dispositif est exposé à la lumière du jour ou à la lumière artificielle et le conteneur est donc librement empilé, **en ce que** le signal d'activation peut être fourni à une unité de calcul (12) du dispositif, un signal de dégagement pouvant être envoyé à l'appareil de repérage (7) du dispositif, et **en ce qu'**un signal de désactivation peut être engendré et fourni à l'unité de calcul (10) par le dispositif de mesure (12) lorsque le dispositif est obscurci, **en ce qu'**un signal d'empilement indiquant l'état d'empilement du conteneur peut être envoyé par l'unité de calcul (12) à l'émetteur (8) lorsque le dispositif de mesure (10) détermine que le dispositif est obscurci pendant la nuit plus longtemps que l'obscurité normale, et **en ce que** les signaux correspondant à l'état d'empilement ou à l'état de dégagement du conteneur peuvent être envoyés par l'émetteur (8) à la centrale de surveillance.

2. Dispositif selon la revendication 1, **caractérisé en ce que** le dispositif de mesure (10) peut être alimenté en courant par l'unité de charge (4) et **en ce que** l'état d'activation de l'unité solaire (1) peut être dérivé par le dispositif de mesure (10) depuis le signal de sortie de l'unité solaire (1) activée.

3. Dispositif selon la revendication 1, **caractérisé en ce que** le dispositif de mesure (10) peut être alimenté en courant par l'unité de charge (4) et **en ce que** l'état d'activation de l'unité solaire (1) peut être dérivé par le dispositif de mesure (10) depuis le signal de sortie d'un capteur de lumière (16).

4. Dispositif selon la revendication 3, **caractérisé en ce que** le capteur de lumière (16) est agencé dans la zone de l'unité solaire (1).

5. Dispositif selon l'une des revendications 1 à 4, **caractérisé en ce que** le récepteur (9) et l'émetteur (8) font partie de l'appareil de repérage (7).

6. Dispositif selon l'une des revendications 1 à 5, **caractérisé en ce que** le signal d'empilement peut être engendré par l'unité de calcul (12) lorsque le dispositif de mesure (10) engendre le signal de désactivation pendant plus de 24 heures.

7. Dispositif selon l'une des revendications 1 à 6, **caractérisé en ce que** le seuil de commutation pour la reconnaissance de l'état d'activation est défini de telle sorte que le signal d'activation peut être engendré par le dispositif de mesure (10) même lorsque l'unité solaire (1) ou le capteur de lumière (16) détecte la lumière artificielle habituelle pendant les travaux de nuit.

8. Dispositif selon l'une des revendications 1 à 7, **caractérisé en ce que** l'unité de calcul (12) est un microcontrôleur à faible puissance.

9. Dispositif selon l'une des revendications 1 à 8, **caractérisé en ce que** pour faire des économies d'énergie, le récepteur (9) peut être déconnecté lorsque le signal d'empilement est engendré.

10. Dispositif selon l'une des revendications 1 à 9, **caractérisé en ce que** le récepteur est un récepteur GPS.

11. Dispositif selon l'une des revendications 1 à 10, **caractérisé en ce que** l'unité de charge (4) présente un accumulateur (19) pour accumuler de l'énergie.

12. Procédé de reconnaissance de l'état d'empilement d'un conteneur, dans lequel l'état d'activation et l'état de désactivation d'une unité solaire (1) sont détectés au moyen d'un dispositif de mesure (10), un signal de dégagement indiquant l'état de dégagement du conteneur est engendré lorsque le dispositif de mesure (10) détecte l'état d'activation de l'unité solaire (1) lorsque la lumière du jour ou la lumière artificielle est incidente depuis l'extérieur du conteneur, et un signal d'empilement indiquant l'état d'empilement du conteneur est engendré lorsque l'état de désactivation de l'unité solaire (1) est détecté dans le cas où le dispositif est obscurci pendant une période plus longue que celle qui correspond à l'état de désactivation d'une phase nocturne normale.

13. Procédé selon la revendication 12, **caractérisé en ce que** le dispositif est fixé dans une moulure de la paroi supérieure du conteneur.
